(19) Europäisches Patentamt
European Patent Office
Office européen des brevets

(11) Publication number: **0 354 718 B1**

(12) **EUROPEAN PATENT SPECIFICATION**

(45) Date of publication of patent specification: **26.05.93**
(51) Int. Cl.$^5$: **B60C 11/11**

(21) Application number: **89307866.7**

(22) Date of filing: **02.08.89**


(54) **Pneumatic radial tyre.**


(30) Priority: **12.08.88 JP 202479/88**

(43) Date of publication of application:
**14.02.90 Bulletin 90/07**

(45) Publication of the grant of the patent:
**26.05.93 Bulletin 93/21**

(84) Designated Contracting States:
**DE FR GB**



(56) References cited:
**DE-A- 2 326 455**
**LU-A- 79 499**
**US-A- 4 676 290**

**GUMMIBEREIFUNG, vol. 59, no. 4, April 1983, page 14-15, Bielefeld, DE; Avon Turbospeed, Fulda Y-2000**

**GUMMIBEREIFUNG, vol. 64, no. 4, April 1988, page 50, Bielefeld, DE; Semperit Direction**



(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Kajikawa, Akira**
**1-4-14 Uozaki Nishimachi Higashinada-ku**
**Kobe-shi Hyogo-ken(JP)**
Inventor: **Saito, Saneto**
**1 Minatojima Nakamachi 3-chome Chuo-ku**
**Kobe-shi Hyogo-ken(JP)**
Inventor: **Saito, Kenji**
**14-80 Koujidai 4-chome Nishi-ku**
**Kobe-shi Hyogo-ken(JP)**

(74) Representative: **Stewart, Charles Geoffrey**
**SP TYRES UK LIMITED Tyre Technical Division**
**Fort Dunlop Birmingham B24 9OT (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).





Rank Xerox (UK) Business Services
(3.10/3.6/3.3.1)

## Description

The present invention relates to a pneumatic tyre having a tread pattern of the block type.

Due to the recent intensification in regulations for the use of spiked tyres in many countries the use of studless tyres is now increasing. Although the studless tyres have no spikes they obtain their performance on snowy and icy road by means of improved properties of their tread rubber at low temperature.

Also such studless tyres are more likely to be used in normal road conditions as well as on snowy and icy roads and so it is necessary for the studless tyres to have satisfactory properties including both noise generating properties and wear resistance as well as good performance on snowy and icy roads.

With regard to these tyre performance properties it is known that:

(a) block type tread patterns can enhance the performance on snowy and icy roads but are inferior in low noise performance;

(b) in block type tread patterns, an increase in the ratio of the groove area to the total area of the ground contacting face improves the performance on snowy roads, but worsens the performance on icy or icebound roads;

(c) in block type tread patterns, an increase in the number of sipes provided in the block surface improves the performance on snowy and icy roads, but heightens the noise level and accordingly lowers the low noise performance;

(d) on the other hand, rib type tread patterns are superior in low noise performance, but inferior in performance on snowy and icy roads; and

(e) in rib type tread patterns, by reducing the number of sipes formed in the ribs, the low noise performance is improved, but the performance on snowy and icy roads is reduced.

Thus, the performance on snowy and icy roads and low noise performance and wear resistance on normal roads cannot be satisfied simultaneously, and the performance on snowy and icy roads has to be considered as different performance criteria.

In a prior art tyre known from US-A-4 676 290, which corresponds to the preamble of claim 1, the depth of each side groove in the axial direction is between 20% and 40% of the axial block width, and the radial depth of each side groove is between 70% and 100% of the depth of the main groove.

It is an object of the present invention to provide a pneumatic tyre in which the performance on snowy and icy roads and the low noise performance and wear resistance on normal roads are together improved.

This object is achieved by the features of claim 1.

According to the present invention, a pneumatic tyre comprises a tread provided with at least two main grooves extending straight in the circumferential direction of the tyre to axially divide the tread into at least three rib portions and lateral grooves extending across said at least three rib portions substantially parallel to the axial direction to the tyre to circumferentially divide each rib portion into a row of substantially rectangular blocks having two end balls each facing the lateral groove and at least one side wall facing a main groove, each block is provided on each side wall facing a main groove with at least too side grooves , said side grooves having an outer end opened at the main groove, an inner end terminating within the block, a top end opened at the top of the block, and a bottom end terminating within the block, the depth of each side groove in the axial direction of the tyre being not less than 5% and not more than 50% of the axial width of the block, the width of each side groove in the circumferential direction of the tyre being not less than 5% and not more than 25% of the circumferential length of the block and the depth of each side groove being not less than 15% and not more than 80% of the depth of the main groove.

According to an embodiment of the present invention, a pneumatic tyre comprises a tread made of rubber composition including powdery processed husks of grain such as rice.

Further embodiments of the present invention will now be described in detail with reference to the drawings, in which:

Figure 1 is a developed view showing the tread pattern of an embodiment of the invention;

Figures 2 to 4 are sectional views showing examples of the main grooves;

Figures 5 to 10 are sectional views showing examples of side grooves;

Figure 11 is a perspective view showing a block;

Figure 12 is a diagram showing the results of tests for performance on snow and ice and wear resistance; and

Figure 13 is a diagram showing the frequency analysis of pattern noise.

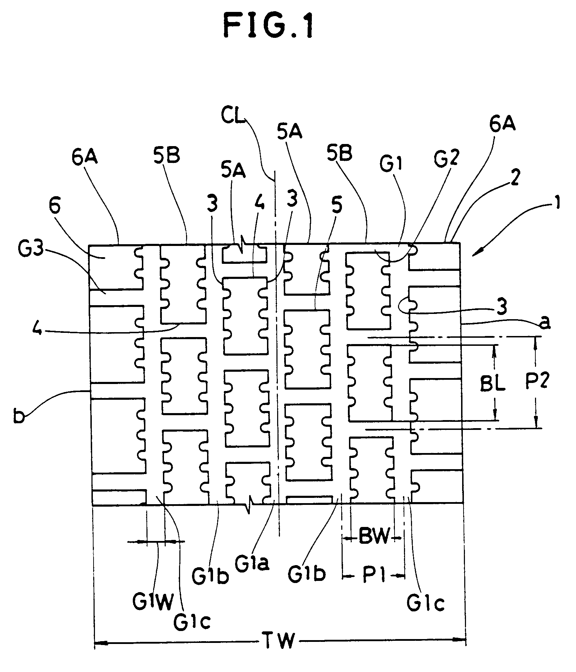

In Figure 1 a pneumatic tyre 1 has a tread 2 provided with a main groove G1a extending along the equator CL of the tyre and two main grooves G1b, G1c disposed on each side of the main groove G1a. All the main grooves G1 are straight grooves.

The ribs formed between each pair of adjacent two main grooves G1 are each divided by lateral grooves G2 connecting therebetween to provide four rows 5A, 5B of blocks 5 each having sidewalls 3 facing the main grooves G1 and end walls 4 facing the lateral grooves G2. Further, the ribs formed between the outermost main grooves G1c and the tread edges a and b are divided into two rows 6A and 6B of blocks 6 along the edges a and b by lateral grooves G3 thereon.

Since the main grooves G1 are straight in the circumferential direction of the tyre and the lateral grooves G2 and G3 are also straight in the axial direction of the tyre, the shape of the blocks 5 and 6 is rectangular.

Moreover, in this embodiment, the main grooves G1a, G1b and G1c are arranged at regular intervals P1 in the axial direction of the tyre, and also the lateral grooves G2 are arranged at regular intervals P2 in the circumferential direction. Accordingly, the blocks 5 have an identical rectangular shape in plan.

Here, the distance between the main groove G1c and the edge a or b is longer than the interval P1 of the main grooves G1, that is, the blocks 6 along the tread edges a and b are formed wider than the blocks 5.

The phases of the lateral grooves G2, G3 are shifted step by step in the circumferential direction of the tyre from one tread edge a to the other tread edge b in order.

In this way, the tyre 1 has a block type tread pattern.

The ratio SG/S of the total area SG of the grooves G1, G2 and G3 at the surface of the tread 2 (i.e. the grooved area) to the total area S of the surface of the tread 2 is set to be not less than 0.2 and not more than 0.55. When the ratio SG/S is less than 0.2, though the wear resistance is enhanced, the grip force on the snow and ice is reduced, thereby lessening the tyre performance on snowy and icy roads. Accordingly, it is more preferably to set the ratio not less than 0.3. To the contrary, when it is over 0.55, the grooved area becomes so large as to decrease the wear resistance of the tyre. Accordingly, the ratio SG/S should be more preferably set not more than 0.5.

For that reason, in this embodiment having five main grooves, the total of the groove widths G1W of the main grooves G1 is set in a range from 0.2 to 0.35 times the tread width TW between the edges a and b.

Even when the number of main grooves is changed, the total width thereof is preferably set substantially in the same range as above.

The groove widths G1W of the main grooves G1 can be set either to be identical or different. This makes it easy to keep the ratio SG/S in the above range, and enhance the straightforward travelling property and draining performance of the straight main grooves G1.

The widths of the lateral grooves G2 and G3 are set in a range not more than the groove width G1W of the main groove G1 and not less than 0.6 times thereof. This makes it possible to maintain the traction performance produced by the lateral grooves G2 and G3.

The spacing intervals P2 of the lateral grooves G2 and G3 in the circumferential direction are designed to divide the entire circumference of the tyre into not less than 45 parts and not more than 75 parts, more preferably not less than 50 parts and not more than 65 parts. When this number of the intervals or that of the blocks in each row 5A, 5B 6A exceeds 75, the block length GL between the end walls 4, becomes so short that the stiffness of the block in the circumferential direction is reduced, and the wear resistance is sacrificed, and further the low noise performance is lessened. On the other hand, when the number is less than 45, the block length BL is so long as to reduce the number of lateral grooves G2 and G3, which worsens the tyre traction force on a snow surface and thus deteriorates the performance on snowy and icy roads. Consequently, the intervals P2 should be set so as to form 45 to 75 blocks and more preferbly 50 to 65 blocks in one circumference of the tyre.

In the meantime, it is possible to change the intervals P2 according to a pitch variation method to reduce noise.

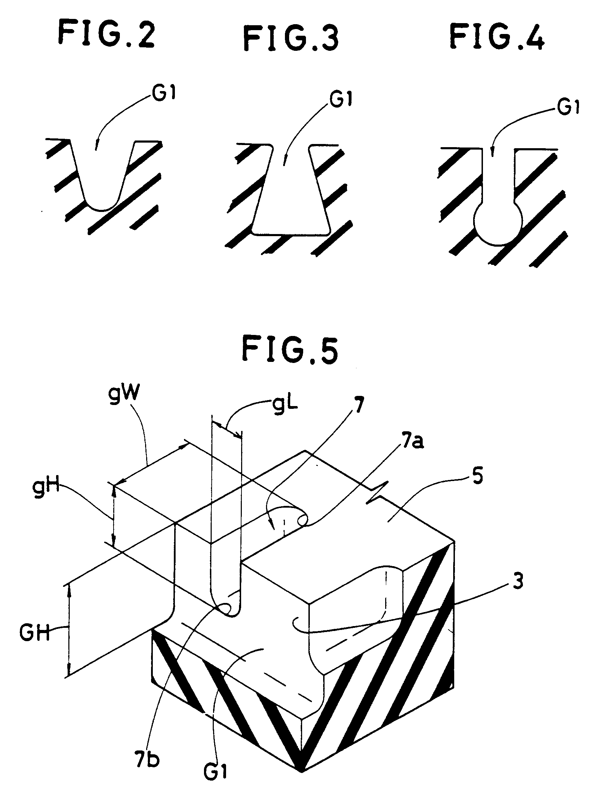

For the main grooves G1, as shown in Figures 2 to 4, a variety of shapes, such as a U－shape, one widened towards the bottom or one having a wider almost circular part in the bottom, can be used. By increasing the width in the bottom part as shown in Figures 3 and 4, the side walls of the blocks 5 and 6 can be more easily deformed, and the grip property on snow and ice can be improved.

The central blocks 5 are provided in each of their side walls with at least two, in this embodiment, three blind side grooves 7 at regular intervals along the side wall of each block. The number of side grooves 7 can be changed as necessary from one to six per block. Likewise, the side blocks 6 are also provided on the side walls 3 facing the main grooves G1c with side grooves 7.

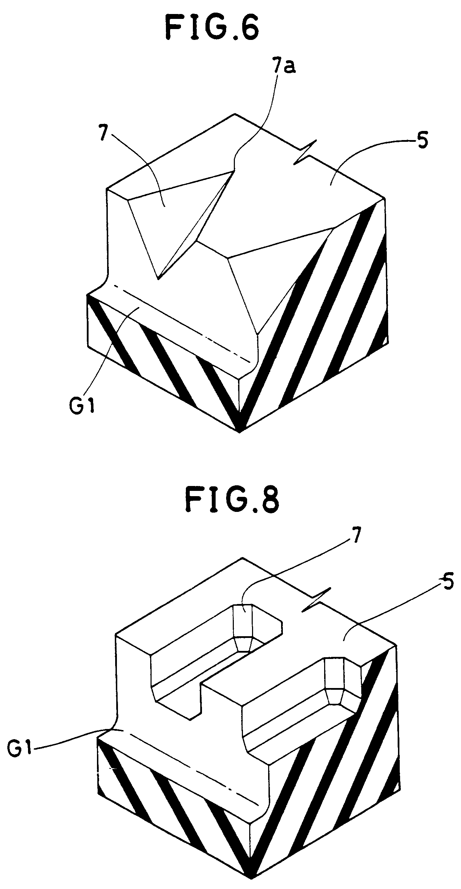

The side grooves 7 extend in the radial direction of the tyre, and the radially outer end is open at the top of the block to increase the edges of the block. In this embodiment, each groove 7 is of a U－shape and has a curved inner wall 7a and a curved bottom 7b as shown in Figure 5.

The depth gW of each side groove 7 from the block side wall 3 to the inner wall 7a is set to be not less than 5% and not more than 50% of the block width BW which is the distance between the side walls 3 of the block 5.

The width gL of the side grooves 7 which is the width of the side groove in the circumferential direction of the tyre at the block side wall, is set to be not less than 5% and not more than 25% of the block length BL which is the distance between the end walls 4 of the block 5.

The depth gH of each side groove 7 in the block side walls 3 is set to be not less than 15% and not more than 80% of the depth GH of the main groove G1.

The side grooves 7 enhance the snow scraping effect of the blocks and improve the starting, accelerating and braking performance properties on snow in comparison with blocks having no side grooves, thereby raising the traction and driving ability on snow.

Also on an ice surface, the edges between the side groove faces and the tread face enhances the ice shaving effect and the engaging effect to the ice and the starting, accelerating and braking performances are further improved. As a result, traction and driving performance on ice are improved.

When the depth gW is shorter than 5% of the block width BW, the scraping effect on snow and the engaging effect with ice by the edges are inferior. To the contrary, when the depth gW is more than 50%, pattern noise is generated, and the side grooves 7 tend to cause heel and toe wear of the block.

When the width gL is less than 5% of the block length BL, the groove width is too short, which reduces the scraping effect and engaging effect on snow, and thus reduces the performance on snow. When width gL is larger than 25%, the grooved area is excessively large and the ground contact area becomes too small and wear resistance is sacrificed.

Moreover, when the height gH is less than 15% of the groove depth GH of the main groove, the side grooves 7 are eliminated relatively early in the tyre life due to abrasion of the tread, which brings about a decrease of scraping effect on snow and ice. When it is larger than 80%, the stiffness of the block 5 is lowered, and the low noise performance and wear resistance are likely to be lessened.

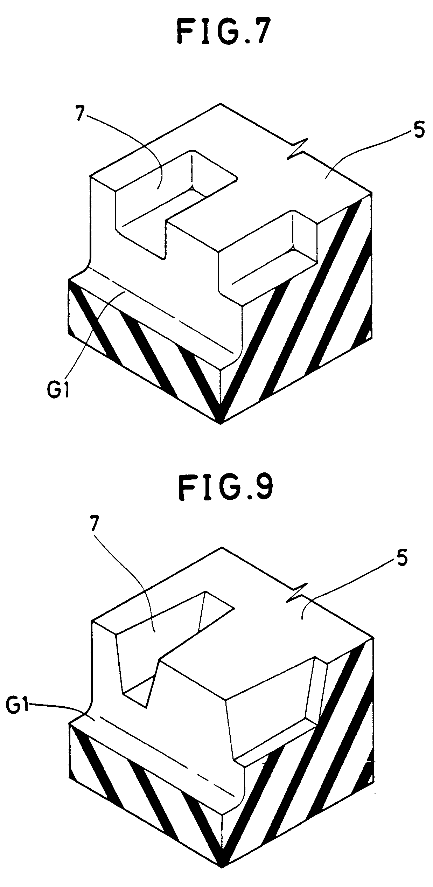

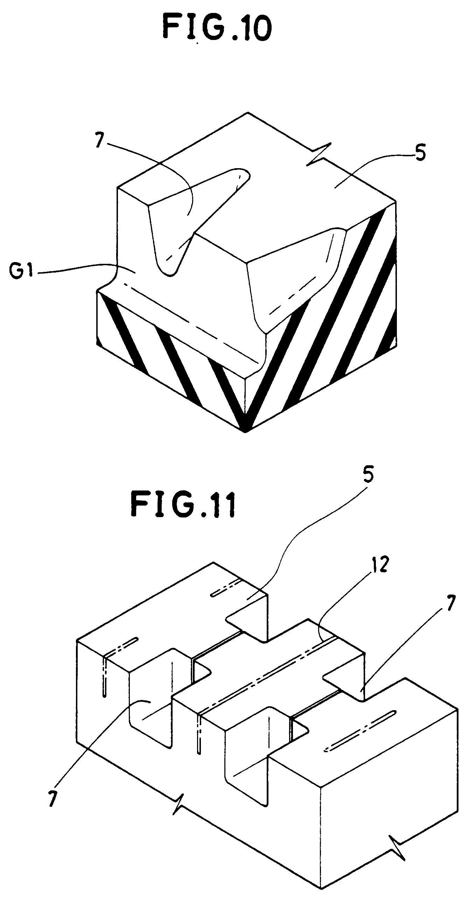

For the side grooves 7, a variety of forms can be used instead of the above-mentioned U-shaped one shown in Figure 5. For example the following shapes may be used:
V-shaped reducing in radial depth towards the inner wall 7a as shown in Figure 8;
a rectangular section as shown in Figure 7;
inclined walls around the bottom of each groove as shown in Figure 8;
trapezoidal grooves gradually reducing in width gL towards the inner end 7a and having groove walls inclined as showin in Figure 9; and
rounded-V-shaped grooves which gradually reduce in width towards the inner wall 7a wherein the inner wall and bottom are rounded as shown in Figure 10.

It is known that a great number of sipes formed in blocks to reduce the stiffness of the blocks and to increase edge effects can increase the performance on snow and ice, but this increases pattern noise particularly in the high frequency band, and also reduces resistance to wear.

To the contrary, by using the side grooves in the structure of the present invention the performance on snow and ice can be improved without increasing noise or substantially sacrificing wear resistance.

It is however possible to provide an axially extending sipe 12 in the blocks of the invention together with the side grooves 7 as shown in Figure 11, and the number of the sipe(s) is selected from one to five.

If it is attempted to improve the performance on snow and ice by sipes alone, the sipe substantially worsen the low noise performance and wear resistance. However, the combination of the sipes with the grooves 7 can reduce the number of sipes and their dimensions, and is fully effective in enhancing the performance on snow and ice. Such tyres are also included in this invention.

As shown by a single-dot chain line in Figure 11 the sipe 12 can be formed to cross each block, and also can be formed only in the centre part between the side grooves 7 as shown by a solid line. Furthermore it is possible to form them only near the side walls 3, or only at the centre part of the blocks, or combining these possibilities.

The sipes 12 may be formed on all the blocks 5 and 8 or only in appropriate block rows, or not in every block in a particular block row, by skipping one or two blocks or the like.

In this way, it is possible to use the sipe(s) 12 to improve the performance on snow and ice while preventing decrease in the low noise performance and wear resistance of the tyre tread.

For the tread rubber of the tread 2, a rubber compound containing powdery proscess husks of rice may be used.

Accordingly, when braking, accelerating, and turning operations are made on an icebound road, the husk, which is harder than the base rubber, scratches the icebound road surface and then functions as a spike. When the husk is pulled out, holes are formed, and the edges thereof enhance the friction force with the iced surface, thereby improving grip and traction on ice.

To obtain the above effects, the average particle size of the husk is set at 20 to 600 microns. When it is less than 20 microns, the spike effect is inferior. When it is more than 600, microns, the contact of the husk itself with the road surface is so increased that the contact of the rubber with the road surface is reduced, which may lessen the grip performance on ice.

The husk content is set to be 3 to 25 parts by weight to 100 parts by weight of the rubber base. When it is less than 3 parts by weight, the spike effect is less. When it is more than 25 parts by weight, the contact area of rubber with the ground is reduced and the wear resistance is reduced.

Note that in addition, the husk does not cause damage to the road surface. Accordingly, the husk does not cause dust from the paved road, unlike rubber compounded with hard materials such as metals, and contact with an iced road surface can be maintained.

Furthermore, as it is a natural product, environmental pollution is prevented.

Still furthermore, husk is inexpensive, has an optimum hardness, bonds well to rubber, and does not cause a reduction of the trear strength of the tread rubber or crack resistance at the groove bottoms.

On the other hand, the peak temperature at which the loss tangent (tan delta) of the tread rubber (measured by a viscoelastic spectrometer produced by Iwamoto Seisakusho) has a maximum preferably not higher than −40 degrees C.

For the rubber compound in which the peak temperature is over −40 degrees C, the dependency of modulii (in particular, hardness) on temperature is large, and the hardness tends to be increased in the low temperature range from −40 to −10 degrees C, and as a result, the grip performance on ice is lowered.

For the same purpose, the Shore A hardness at −20 degrees C is preferably mode not less than 60 and not more than 70, and the Shore A hardness at 20 degrees C is not less than 50 and not more than 60. It is thereby possible to still further improve the viscosity with the iced road surface and to upgrade the performance on snow and ice without sacrificing the wear resistance.

To show the effectiveness of the invention tyres of size 165/80R13 were manufactured according to the specifications shown in Table 1, and the performance properties on snow, ice, wear resistance, and low noise performance thereof were measured.

In the test tyres, the block arrangements in Examples 1, 2 and References 1 to 4 were identical to that shown in Figure 1. The rectangular contour shapes of the blocks were set to be identical to each other, and the ratio SG/S of the groove area to the entire area of the tread was set to 0.4.

In Example 1, the blocks were provided with side grooves 7 in the same way as Figure 1. In Example 2, the blocks were provided with V−shaped side grooves 7 as shown in Figure 6. In References 1 and 2, the blocks had no side grooves. In References 3 and 4, the blocks were provided only with sipes. The specifications of the side grooves and the sipes, together with the shapes and dimensions of the blocks are shown in Table 1.

The results found were as follows:

(a) Performance on snow and ice

For ice the tyres were mounted on four wheels of a 1500cc passenger car.

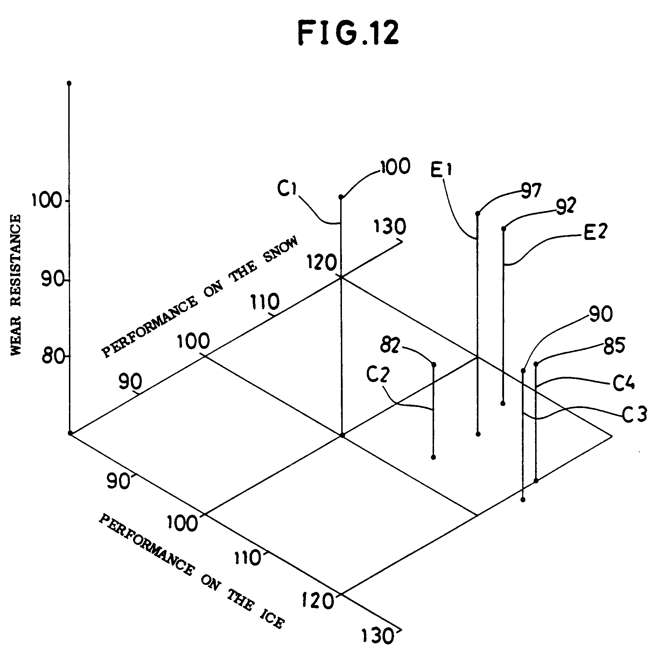

Braking from a speed of 30 km/h was checked by measuring the stopping distance on an iced road to obtain the coefficient of friction between the road surface and the tread. The coefficients were normalised upon the basis that Example 1 is 100, and they are shown in Figure 12 as the performances on ice.

For snow 25 metre and 75 metre fast start tests were made on a snowy road, Taking Reference 1 as 100, the average time for each tyre type was normalised and it is shown in Figure 12 as the performance on snow.

In both tests, the larger the index, the better the performance.

The tyres of Examples 1 and 2 were superior in performance on snow to the tyres of References 1, 2, 3 and 4. As for the performance on ice, References 2 and 3 presents better results.

(b) Wear resistance

By actually driving a car fitted with the test tyres on a dry road, the driving distance for tread wear of 1mm was measured. Based on the assumption that Reference 1 is 100, the distances were normalised, and are shown in Figure 12 as wear resistances.

The tyres of Examples 1 and 2 were superior in wear resistance to the tyres of References 2 to 4.

(c) Low noise performance

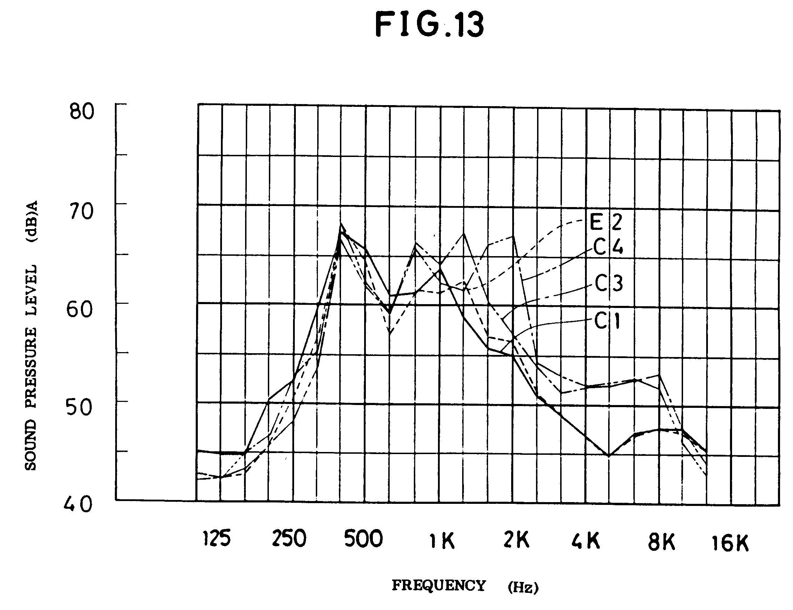

The tyres of Example 1 and References 1, 3 and 4 were each mounted on a laboratory suspension and rotated on a drum at a speed of 40 km/h in an anechoic room, and according to JASO regulations noise at a distance of 1.0 metres was fequency analysed and the results are shown in Figure 13.

In the tests, a drum having a coarse particulate surface with a large coefficient of friction was used to remove the high frequency noise which does not appear in actual running.

In the tyres of References 3 and 4, as shown in Figure 13, the sound pressure level was high not only in a high frequency band but also all over the frequency band. To the contrary, the tyre of Example 2 had little difference from Reference 1, and the sound pressure thereof was lower than those in References 3 and 4 in both the high frequency band and all over the band of frequencies.

The improvement in performance on snow and ice provided by the side grooves was without increase in pattern noise particularly in the high frequency area band in comparison with a tyre using sipes, thereby preventing the low noise performance from decreasing. Further, the reduction of stiffness of the blocks is avoided compared to the case of sipes alone, and as a result loss of wear resistance is prevented.

In this way, it was proved that the tyres of embodiments were improved in performance on snow and ice, and low noise performance and also wear resistance was good.

As explained above, the tyre of this invention can improve performance on both snow and ice without sacrificing the low noise performance or wear resistance by means of arranging side grooves of a specific shape on the side walls of the blocks.

It is further possible to keep and indeed raise the performance on snow and ice from the beginning to the end of tyre life by using the rubber compound containing husks of grain as the tread rubber.

TABLE 1

| | Ex.1 | Ex.2 | Ref.1 | Ref.2 | Ref.3 | Ref.4 |
|---|---|---|---|---|---|---|
| Symbol in Figs.12 & 13 | E1 | E2 | E1 | E1 | E1 | E1 |
| TREAD | | | | | | |
| Shore A hardness | | | | | | |
| at +20 degs.C | 55 | 55 | 55 | 48 | 55 | 55 |
| at -20 degs.C | 63 | 63 | 63 | 55 | 63 | 63 |
| TREAD GROOVE | | | | | | |
| Main groove width (mm) | 6.0 | 6.0 | 6.0 | 6.0 | 6.0 | 6.0 |
| Lateral groove width (mm) | 5.5 | 5.5 | 5.5 | 5.5 | 5.5 | 5.5 |
| BLOCK | | | | | | |
| Block length BL (mm) | 24.2 | 24.2 | 24.2 | 24.2 | 24.2 | 24.2 |
| Block width BW (mm) | 13.2 | 13.2 | 13.2 | 13.2 | 13.2 | 13.2 |
| Number of blocks | 63 | 63 | 63 | 63 | 63 | 63 |
| Side groove | Fig.5 | Fig.6 | None | None | None | None |
| gW/BW | 0.15 | 0.15 | | | | |
| gL/BL | 0.1 | 0.1 | | | | |
| gH/GH | 0.35 | 0.35 | | | | |
| Sip | None | None | None | None | | |
| Number | | | | | 2 | 2 |
| Depth (mm) | | | | | 7.0 | 7.0 |
| Block shape | | | | | | |

## Claims

1. A pneumatic tyre comprising a tread provided with at least two main grooves (G1) extending in the circumferential direction of the tyre to axially divide the tread into at least three rib portions, and lateral grooves (G2,G3) extending across said at least three rib portions connecting said main grooves to circumferentially divide each rib portion into a row of multiple tread blocks (5) having two end walls (4) each facing one of the lateral grooves (G2,G3) and at least one side wall (3) facing one of the main grooves (G1) each block (5) being provided on its side walls (3) facing a main groove (G1) with side grooves (7), said side grooves (7) having an outer end opened at the main groove (G1), an inner end terminating within the block (5), a top end opened at the top of the block (5), and a bottom end terminating within the block (5), characterised in that the main grooves (G1) are straight grooves, the lateral grooves (G2,G3) extend parallel to the axial direction of the tyre, each sidewall (3) of the substantially rectangular blocks (5) is provided with at least two side grooves (7) the depth (gW) of each side groove (7) in the axial direction of the tyre is not less than 5% and not more than 50% of the axial width (BW) of the block (5), the width (gL) of each side groove (7) in the circumferential direction of the tyre is not less than 5% and not more than 25% of the circumferential length (BL) of the block (5) and the radial depth (gH) of each side groove (7) is not less than 15% and not more than 80% of the depth (GH) of the main groove (G1).

**2.** A tyre according to claim 1, characterised in that said lateral grooves (G2,G3) are shifted circumferentially stepwise from one tread edge (a,b) to the other tread edge (b,a).

**3.** A tyre according to claim 1 or 2 characterised in that the ratio SG/S of the total are a SG of the grooves G1,G2 and G3 at the surface of the tread (2) to the total area S of the surface of the tread (2) is in the range of 0.2 to 0.55.

**4.** A tyre according to any of claims 1 to 3 characterised in that the total of the groove widths (G1W) of tile main grooves (G1) is in the range of 0.2 to 0.35 times the tread width (TW) between the tread edges (a and b).

**5.** A tyre according to any of claims 1 to 4 characterised in that the main grooves (G1) are of differing widths.

**6.** A tyre according to any of claims 1 to 5 characterised in that the widths of the lateral grooves (G2,G3) are in the range of 0.6 to 1.0 times the width of the main groove (G1).

**7.** A tyre according to any of claims 1 to 6 characterised in that the lateral grooves (G2,G3) divide the tyre circumference into 45 to 75 intervals (P2).

**8.** A tyre according to any of claims 1 to 7 characterised in that sipes (12) are provided in the tread blocks (5).

**9.** A tyre according to any one of claims 1 to 8 characterised in that the tread is made of a rubber composition containing powdery husks of grain.

**Patentansprüche**

**1.** Luftreifen mit einem Laufstreifen, der mit mindestens zwei Hauptnuten (G1) versehen ist, welche sich in der Umfangsrichtung des Reifens so erstrecken, daß sie den Laufstreifen in Axialrichtung in mindestens drei Rippenabschnitte unterteilen, und mit Quernuten (G2, G3), die sich über die mindestens drei Rippenabschnitte erstrecken und die Hauptnuten miteinander verbinden, um in Umfangsrichtung jeden Rippenabschnitt in eine Reihe von mehrfachen Laufstreifenblöcken (5) zu unterteilen mit zwei Endwänden (4), die jeweils einer der Quernuten (G2, G3) zugewendet sind, und mindestens einer Seitenwand (3), die einer der Hauptnuten (G1) zugewendet ist, wobei jeder Block (5) an seinen einer Hauptnut (G1) zugewendeten Seitenwänden (3) mit Seitennuten (7) versehen ist, welche Seitennuten (7) ein zu der Hauptnut (G1) offenes äußeres Ende besitzen, ein innerhalb des Blocks (5) endendes inneres Ende und ein an der Oberseite des Blocks (5) offenes oberes Ende und ein innerhalb des Blocks endendes unteres Ende, dadurch gekennzeichnet, daß die Hauptnuten (G1) geradlinige Nuten sind, die Quernuten (G2, G3) sich parallel zur Axialrichtung des Reifens erstrecken, jede Seitenwand (3) der im wesentlichen rechtwinkligen Blöcke (5) mit mindestens zwei Seitennuten (7) versehen ist, die Tiefe (gW) jeder Seitennut (7) in Axialrichtung des Reifens nicht weniger als 5% und nicht mehr als 50% der Axialbreite (BW) des Blocks (5) beträgt, die Breite (gL) jeder Seitennut (7) in der Umfangsrichtung des Reifens nicht weniger als 5% und nicht mehr als 25% der Umfangslänge (BL) des Blocks (5) beträgt und die radiale Tiefe (gH) jeder Seitennut (7) nicht weniger als 15% und nicht mehr als 80% der Tiefe (GH) der Hauptnut (G1) beträgt.

**2.** Reifen nach Anspruch 1, dadurch gekennzeichnet, daß die Quernuten (G2, G3) in Umfangsrichtung stufenweise von einer Laufstreifenkante (a, b) zur anderen Laufstreifenkante (b, a) verschoben sind.

3. Reifen nach Anspruch 1 oder 2, dadurch gekennzeichnet, daß das Verhältnis SG/S der Gesamtfläche SG der Nuten G1, G2 und G3 an der Oberfläche des Laufstreifens (2) zur Gesamtfläche (S) der Oberfläche des Laufstreifens (2) in dem Bereich von 0,2 bis 0,55 liegt.

4. Reifen nach einem der Ansprüche 1 bis 3, dadurch gekennzeichnet, daß die Summe der Nutenbreiten (G1W) der Hauptnuten (G1) im Bereich vom 0,2- bis zum 0,35-fachen der Laufstreifenbreite (TW) zwischen den Laufstreifenkanten (a und b) liegt.

5. Reifen nach einem der Ansprüche 1 bis 4, dadurch gekennzeichnet, daß die Hauptnuten (G1) unterschiedliche Breite besitzen.

6. Reifen nach einem der Ansprüche 1 bis 5, dadurch gekennzeichnet, daß die Breiten der Quernuten (G2, G3) im Bereich vom 0,6- zum 1,0-fachen der Breite der Hauptnut (G1) liegen.

7. Reifen nach einem der Ansprüche 1 bis 6, dadurch gekennzeichnet, daß die Quernuten (G2, G3) den Reifenumfang in 45 bis 75 Abschnitte (P2) unterteilen.

8. Reifen nach einem der Ansprüche 1 bis 7, dadurch gekennzeichnet, daß in den Laufstreifenblöcken (5) Lamellenschnitte (12) vorgesehen sind.

9. Reifen nach einem der Ansprüche 1 bis 8, dadurch gekennzeichnet, daß der Laufstreifen aus einem pulverisierte Getreidehülsen enthaltenden Gummimasse gefertigt ist.

**Revendications**

1. Pneumatique comprenant une bande de roulement ayant au moins deux gorges principales (G1) disposées dans la direction circonférentielle du pneumatique afin qu'elles divisent axialement la bande de roulement en au moins trois parties à nervures, et des gorges latérales (G2, G3) recoupant les trois parties à nervures au moins et reliant les gorges afin que chaque partie à nervure soit divisée circonférentiellement en une ligne de blocs (5) de bande de roulement ayant deux parois (4) d'extrémité tournées chacune vers les gorges latérales (G2, G3) et au moins une paroi latérale (3) tournée vers l'une des gorges principales (G1), chaque bloc (5) ayant, sur ses parois latérales (3) tournées vers la gorge principale (G1), des gorges de côté (7), les gorges de côté (7) ayant une extrémité externe débouchant dans la gorge principale (G1), une extrémité interne se terminant dans le bloc (5), une extrémité supérieure débouchant à la partie supérieure du bloc (5), et une extrémité de fond aboutissant dans le bloc (5), caractérisé en ce que les gorges principales (G1) sont des gorges rectilignes, les gorges latérales (G2, G3) sont disposées parallèlement à la direction axiale du pneumatique, chaque paroi latérale (3) des blocs sensiblement rectangulaires (5) a au moins deux gorges de côté (7), la profondeur (gW) de chaque gorge de côté (7) dans la direction axiale du pneumatique n'est pas inférieure à 5 % ni supérieure à 50 % de la largeur axiale (BW) du bloc (5), la largeur (gL) de chaque gorge de côté (7), dans la direction circonférentielle du pneumatique, n'est pas inférieure à 5 % ni supérieure à 25 % de la longueur circonférentielle (BL) du bloc (5), et la profondeur radiale (gH) de chaque gorge de côté (7) n'est pas inférieure à 15 % ni supérieure à 80 % de la profondeur (GH) de la gorge principale (G1).

2. Pneumatique selon la revendication 1, caractérisé en ce que les gorges latérales (G2, G3) sont décalées circonférentiellement par pas d'un bord (a, b) de bande de roulement à l'autre bord (b, a).

3. Pneumatique selon la revendication 1 ou 2, caractérisé en ce que le rapport SG/S de la surface totale SG des gorges G1, G2 et G3 sur la surface de la bande de roulement (2) à la surface totale S de la surface de la bande de roulement (2) est compris entre 0,2 et 0,55.

4. Pneumatique selon l'une quelconque des revendications 1 à 3, caractérisé en ce que la somme des largeurs (G1W) des gorges principales (G1) est comprise entre 0,2 et 0,35 fois la largeur (TW) de la bande de roulement entre les bords (a et b) de la bande de roulement.

5. Pneumatique selon l'une quelconque des revendications 1 à 4, caractérisé en ce que les gorges principales (G1) ont des largeurs différentes.

6. Pneumatique selon l'une quelconque des revendications 1 à 5, caractérisé en ce que les largeurs des gorges latérales (G2, G3) sont comprises entre 0,6 et 1,0 fois la largeur de la gorge principale (G1).

7. Pneumatique selon l'une quelconque des revendications 1 à 6, caractérisé en ce que les gorges latérales (G2, G3) divisent la circonférence du pneumatique en 45 à 75 intervalles (P2).

8. Pneumatique selon l'une quelconque des revendications 1 à 7, caractérisé en ce que des fentes (12) sont formées dans les blocs (5) de la bande de roulement.

9. Pneumatique selon l'une quelconque des revendications 1 à 8, caractérisé en ce que la bande de roulement est formée d'une composition de caoutchouc contenant de la poudre de téguments de céréales.

FIG.1

CL
5A
6A
6A
5B
5A
5B
G1
G2
2
6
3
4
3
5
1
G3
3
a
4
BL
P2
b
BW
G1b
G1a
G1b
P1
G1W
G1c
G1c
TW

FIG.2

G1

FIG.3
G1

FIG.4
G1

FIG.5
gW
gL
7
7a
5
gH
3
GH
7b
G1

FIG.6

7a
7
5
G1

FIG.8

7
5
G1

FIG.7

7
5
G1

FIG.9

7
5
G1

FIG.10
7
5
G1
FIG.11
5
12
7
7

FIG.12

WEAR RESISTANCE
100
90
80
PERFORMANCE ON THE SNOW
90
100
110
120
130
PERFORMANCE ON THE ICE
90
100
110
120
130
C1
100
E1
97
92
E2
82
C2
90
85
C4
C3

FIG.13

80
70
60
50
40
SOUND PRESSURE LEVEL (dB)A
125
250
500
1K
2K
4K
8K
16K
FREQUENCY (Hz)
E2
C4
C3
C1